# EUROPEAN PATENT APPLICATION

(11) **EP 2 383 553 A1**
(43) Date of publication of application: **02.11.2011**
(21) Application number: 10161618.3
(22) Date of filing: 30.04.2010
(51) Int. Cl.: G01F 11/08, G01F 11/02

(54) **Package for storing and dosing a fluid**

(71) Applicant: Nestec S.A., 1800 Vevey (CH)
(72) Inventor: Contal, Alain, CH-1315 La Sarraz (CH)
(74) Representative: Ducreux, Marie

(57) **Abstract**

The invention concerns a Package for storing and dosing fluid comprising:
- a flexible container for storing a fluid and presenting a fluid outlet,
- dosing means comprising :
. a housing, said housing presenting a pump inlet and a pump outlet and a part of the housing between the inlet and the outlet being flexible and resilient,
. a rotor presenting at last one chamber formed between the rotor surface and the housing,

- a one-way valve,

wherein the housing pump inlet is connected to the flexible container and the housing pump outlet is connected to the one-way visco-elastic valve.

## Description

The present invention relates to a package presenting storing, dosing and dispensing functions and particularly adapted for dispensing microbiologically sensible food fluid products.

One way to aseptically dispense al, microbiological sensitive fluid through a dispenser consists in storing the fluid in a bag-in-box (BIB) type container with a delivery tube comprising an aseptic one-way valve at the outlet of the tube. A type of aseptic valve consists of a so-called visco-elastic valve comprising a valve body presenting a cylinder or a truncated cone form and the valve body comprising an internal channel connected to one or several fluid delivery ports. The valve also comprises an elastomeric cylinder having an internal section smaller than the section of the valve body so that the elastomeric cylinder is tightly fitted over the fluid delivery ports and over the valve seat. Such a valve is, for example, set forth in US 7,243,682, US 5,836,484 or WO 2006/063000.

The dispensing is accomplished by the means of a pump such as a peristaltic pump that exerts a pressure on the flexible tube and on the fluid present in the tube, and then in the valve body internal channel and delivery ports. When the fluid pressure exceeds the pressure outside the valve, this pressure urges the elastic cylinder away from the valve body and the delivery ports. Fluid then flows out between the valve body and the elastic cylinder. When the pump is stopped, the pressure outside the valve body exceeds the fluid pressure and the elastic cylinder is clamped tightly against the valve body, thereby preventing flow back through the valve. Consequently flow is only permitted in one direction.

Yet, it has been observed in such dispensers that the aseptic state between two fluid deliveries is not maintained systemwide. Depending of the valve design, the visco-elastic valves can maintain a certain back-pressure after the pump has stopped and it can take a few minutes before the fluid pressure effectively drops to a lower pressure. Then at the exact closing of the valve the status of the valve is not certain as the valve is too close to an open position to ensure a full and firm closure.

Starting from a valve which is open and delivers a certain liquid flow, a reduction of the pressure of the liquid results in a reduced flow rate and further reduction of the pressure results in a situation where the flow rate reaches zero when the valve reaches what is called the closing pressure. At that point the check valve is in a not very stable status: it is close to being open yet is closed. This is represented by the valve typically slowly leaking a few drops of liquid thus possibly compromising the aseptic state of the remaining liquid. At that closing point, a typical valve, made with an elastomeric membrane fitted over a solid valve seat, the membrane is already fitted onto and in contact with then valve seat. However this fit is not very tight, as is demonstrated by the accumulation of a liquid droplet or dripping from the valve over a short time (up to one minute). After a minute or so of dripping, then the pressure in the delivery system upstream of the valve reaches another value where the valve is now holding a constant pressure over time called the holding pressure. During these phases the check valve is vulnerable to microbial contamination. This phenomenon has been particularly observed in situations where viscous fluids are dispensed or for fluids comprising particulates.

Besides this phenomenon the package comprising the bag-in-box (BIB) type container with a delivery tube comprising an aseptic lone-way valve at the outlet of the tube takes up a lot of place inside a dispensing machine or during storage. The different parts of the package also use several different components of different natures and the production can be complicated and expensive.

It has also been noticed that the use of a peristaltic pump to exert a pressure on the flexible tube does not deliver a consistent dosing. Yet the consistency of dosing is an important issue in the beverage dispensers because it influences the taste of the reconstituted beverage or food which becomes less or more diluted. In terms of product quality, the consistency of the product is important for meeting the satisfaction of the consumer. If the dose-to-dose variation is too large, it affects the in-cup quality of the product in a way that becomes perceptible for the consumer.

An aim of the present invention is to propose a solution to the above problems.

According to a first aspect, the invention concerns a package for storing and dosing a fluid comprising :
- a collapsible container conceived for storing a fluid and presenting a fluid outlet,
- a dosing means comprising :
   - a housing, said housing presenting at least a pump inlet and at least a pump outlet and a part of the housing between the inlet and the outlet being flexible and resilient,
   - a rotor inside the housing presenting at last one chamber formed between the rotor surface and the housing,
- a visco-elastic valve,
wherein the housing pump inlet is connected to the flexible container outlet and the housing pump outlet is connected to the visco-elastic valve.

According to the preferred embodiment the collapsible container is made of an oxygen and water barrier material. This container can be a flexible pouch, eventually stored in a rigid housing like a bag in box (BIB) container, or it can be a bottle made of a compressible material. Usually the container is made of plastic materials, such as for example laminates with or without aluminum, EVOH, PET multilayer, PPPE multilayer or all combinations of these materials. Bioplastics can also be used.

According to another preferred embodiment the rotor of the dosing means is extended by a coupling means intended to be connected to a complementary coupling means belonging to drive means.

Preferably the rotor of the dosing means presents several chambers. This embodiment enables the dosing means to deliver an increased volume of fluid.

According to another preferred embodiment the flexible container stores a microbiological sensitive fluid. This fluid can be chosen in the list of the following fluids : milk based ingredient, a cocoa based ingredient, fruit juices, ... Yet any other fluids less sensible to bacteria can also be dispensed like coffee, tea, ... The fluid can also comprise particulates, these particulates preferably presenting a size of at most 200 µm. Preferably the fluid is a food or beverage ingredient concentrate that can be diluted to prepare a beverage.

According to another preferred embodiment the package of the present invention is disposable.

According to another preferred embodiment the visco-elastic valve of the package is a visco-elastic valve comprises a delivery block having an input port for receiving the fluid and an internal channel beginning at the input port and terminating in at least one output port, an elastomeric membrane for enveloping the delivery block such that a portion of the elastomeric membrane covers the output port and the downstream end of the elastomeric membrane forms the valve outlet.

According to a specific embodiment the invention also concerns a package wherein the dosing means housing comprises a second pump inlet and a corresponding second pump outlet, the second housing pump inlet being connectable to a diluent supply and the second housing pump outlet being connectable to a mixing chamber.

According to a second aspect the invention concerns a beverage and food dispensing device on which a package such as described hereabove can be docked, said device comprising :
- a diluent supply means,
- dosing drive means,
- a mixing chamber,
- a receiving area for receiving the Package and which comprises means for coupling the package dosing means with the dosing drive means and means for coupling the one-way valve with the mixing chamber,
- control means for controlling the supply of diluent and driving the dosing drive means.

In the beverage and food dispensing device the diluent supply means can comprise a water supply duct connected to a water pump and optionally to a water heating system.

The dosing drive means can comprise a motor and a driveshaft connected to complementary coupling means to link with the coupling means of the dosing means.

The beverage and food dispensing device preferably comprises a controller associated with the control means and programmed to control and coordinate the activation of the dosing means drive means and the activation of the diluent supply means.

The present invention also concerns a beverage and food dispensing device on which a package such as described above and comprising a second pump inlet and a second pump outlet can be docked. This dispensing device comprises :
- a diluent supply means,
- dosing drive means,
- a mixing chamber,
- a receiving area for receiving the package and which comprises :
   - means for coupling the package dosing means with the dosing drive means,
   - means for coupling the one-way valve with the mixing chamber,
   - means for coupling the diluent supply means with the second pump inlet of the dosing means housing, and
   - means for coupling the mixing chamber with the second pump outlet of the dosing means housing,
- control means for driving the dosing drive mean.

According to a third aspect the invention also concerns a device for dosing and delivering a fluid, the device being able to be connected to a collapsible container, said device comprising :
- dosing means comprising :
   - a housing, said housing presenting at least a pump inlet and at least a pump outlet and a part of the housing between the inlet and the outlet being flexible and resilient,
   - a rotor presenting at last one chamber formed between the rotor surface and the housing,
- a visco-elastic valve,
wherein the housing pump outlet is connected to the visco-elastic valve.

According to this third aspect, the device for dosing and delivering a fluid can be in the form of a cap that can be connected to a fluid container by appropriate connecting means.

### Brief description of the drawings

The characteristics and advantages the invention will be better understood in relation to
- Figures 1 depict a schematic view of the package of the present invention.
- Figure 2 depicts a section view of a preferred one way valve that can be used in the package of the present invention.
- Figures 3a and 3b depict a section view of a preferred dosing means that can be used in the package of the present invention.
- Figure 4 depicts a schematic view of al beverage and food dispensing device on which a package according to the present invention is docked.
- Figures 5 and 6 depict schematic views of specific dosing means that can be used in the devices of the present invention

### Detailed description of the drawings

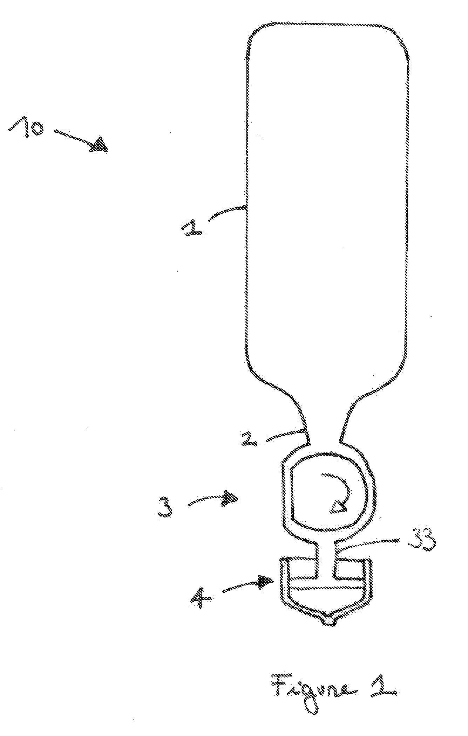

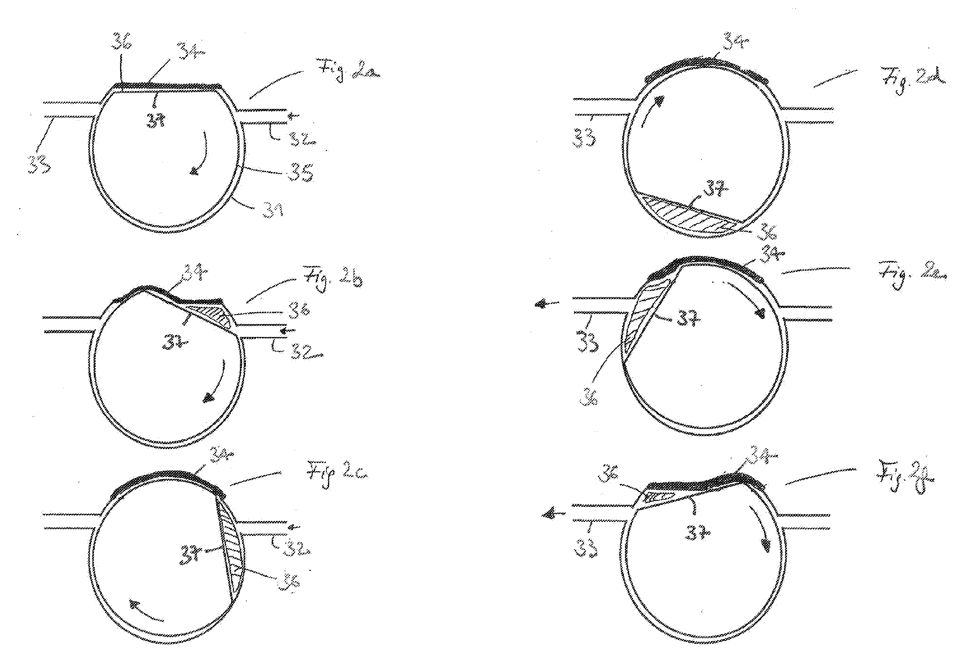

Figures 1 illustrates a package 10 for storing and dosing a fluid according to the present invention. The package comprises a flexible container 1 in which a fluid is stored. The flexible container presents an outlet 2 connected to dosing means 3. This dosing means is more particularly described in relation with Figures 2a to 2f.

The dosing means comprises a housing 31, said housing presenting a pump inlet 32 and a corresponding pump outlet 33. A part 34 of the housing 31 between the inlet 32 and the outlet 33 is flexible and resilient. This portion be an elastomeric material. This portion of the housing is between the inlet 32 and the outlet 33. The housing 31 can be formed of plastic like for example polyethylene or polypropylene. The housing 31 contains the rotor 35. The rotor can also be made of plastic. The rotor 35 is rotatable inside the housing 31. The rotor 35 presents at least a truncated part 37 so that when this part faces the housing part that is not flexible and resilient, this side forms a chamber 36 between the truncated rotor surface 37 and the housing. Apart from the truncated part 37 of the rotor, the rotor 35 fits exactly inside the housing 31. The rotor is rotated by drive means in a clockwise direction from Fig. 2a to Fig 2f. In Figure 2a no fluid circulates in the dosing means. In Figure 2b, due to the rotation of the rotor, a part of the truncated rotor surface 37 does not face anymore the flexible and resilient portion 34 of the housing but a rigid circular part of the housing which is creating a small chamber 36 facing the dosing means inlet 32. Then the fluid inside the inlet 32 fills the chamber 36 and this filling goes on as long as the truncated rotor surface 37 faces the dosing means inlet 32 according to Figure 2c. As the rotor continues to turn the chamber 36 full of fluid turns too according to Figure 2d until it reaches the dosing means outlet 33 according to Figure 2e. Due to the presence of the flexible and resilient portion 34 of the housing after the dosing means outlet 33, the volume of the chamber 36 decreases and the fluid is urged to leave the chamber through the dosing means outlet 33 according to Figures 2e and 2f. The present invention is not limited to this particular embodiment of the dosing means. In particular the dosing means described in WO 2006/027548 or alternatives of DE 199 16 52 can also be implemented.

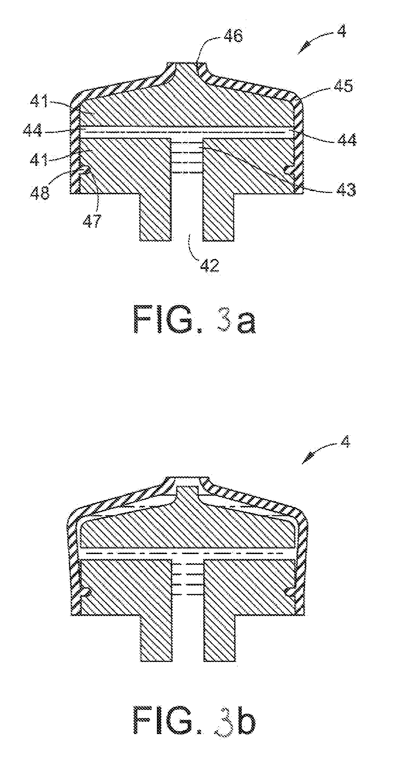

The outlet 33 of the dosing means is connected to one-way valve more preferably to a visco-elastic valve 4. This valve is more particularly described in relation with Figures 3a and 3b. The valve 4 comprises a delivery block 41 having an input port 42 that is connected to the dosing means outlet 5 for receiving the fluid exiting the The input port 42 opens into an internal channel 43 beginning in the input port and terminating in at least one output port 44. The valve comprises an elastomeric membrane 45 for enveloping the delivery block 41 so that a portion of said flexible elastomeric membrane covers the output ports 44. Figure 3a illustrates the valve when it is closed, that is when the fluid inside the channel 43 is not pressurized by the dosing means 3. In this configuration the elastomeric membrane 45 hermetically closes the output ports 44. Figure 3b illustrates the valve when it is opened, that is when the fluid inside the channel 43 is pressurized by the dosing means 3 to a pressure sufficient to move the elastomeric membrane 45 away from the output ports 44. The fluid is then free to pass through the outlets ports 44 and circulates between the elastomeric membrane 45 and the delivery block 41 until the valve outlet 46. Preferably the elastomeric membrane 45 includes a protrusion 48 that can fit inside a groove 47 in the external part of the delivery block 41 to avoid the elastomeric membrane 45 sliding along the delivery block 41.

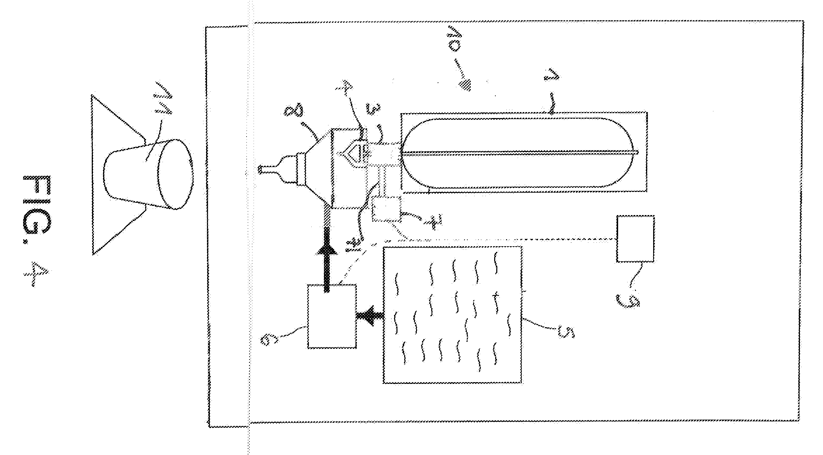

Figure 4 illustrates a beverage and food dispensing device on which a package 10 such as described above is docked. The device comprises :
- a diluent supply means which consists in a water tank 5, in which the water can optionally be heated or cooled, and a pump 6.
- a mixing chamber 8 for mixing the diluent with the fluid delivered by the package 10.
- dosing drive means 7 able to be coupled to the dosing means of the package 10.
- a receiving area for receiving the package 10 and which comprises means 71 for coupling the package dosing means 3 with the dosing drive means 7 and means for coupling/connecting the one-way valve 4 with the mixing chamber 8. The means for coupling/connecting the one-way valve 4 with the mixing chamber 8 can simply be a snap connection or any other means to attach a valve to a chamber.
- control means 9 for controlling the supply of diluent via the pump 6 and driving the dosing drive means 7.

When a beverage is prepared with the device of the present invention, the control means 9 actuates the drive means 7 so that the coupling 71 rotates the rotor 35 of the dosing means 3. The fluid inside the container 1 is dosed by the dosing means 3 and delivered to the valve 4 and then to the mixing chamber 8. Simultaneously the control means 9 actuates the diluent pump 6 so that diluent is delivered to the mixing chamber 8 where it mixes with the fluid. The mixture is then delivered to a cup 11.

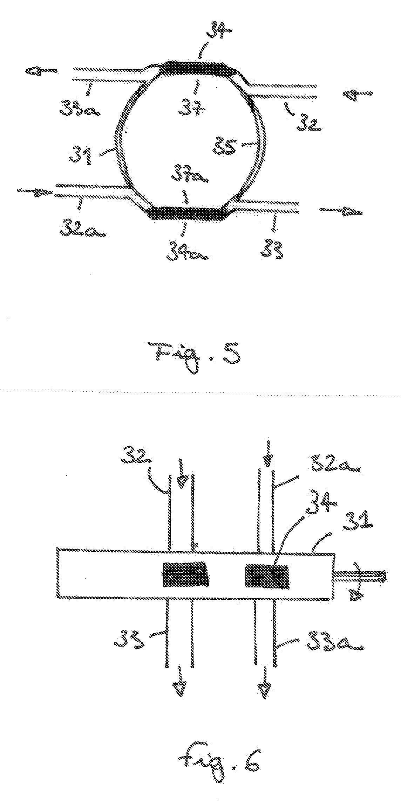

Figure 5 illustrates a dosing means comprising a housing 31 with a second pump inlet 32a and a corresponding second pump outlet 33a according to a first embodiment. Another part 34a of the housing 31 between the inlet 32a and the outlet 33a is flexible and resilient. The rotor 35 presents also a second truncated part 37a. According to this embodiment, a first fluid can be dosed at inlet 32 and delivered in outlet 33 whereas simultaneously a second fluid can be dosed at inlet 32a and delivered in outlet 33a. Each pump inlet 32, respectively 32a, is coupled to a corresponding pump outlet 33, respectively 33a.

Figure 6 illustrates a dosing means comprises a housing 31 with a second pump inlet 32a and a second pump outlet 33a according to a second embodiment. Each couple of outlets and inlets are offset from one another on the same housing and rotor.

These embodiments can be used to simultaneously dose and deliver a beverage concentrate and a diluent, the both being delivered in the same mixing chamber. Such embodiments present the advantage of avoiding the use of two different pumps for the two fluids. Besides the two fluids can be delivered under pressure and effective mixing and eventually foaming can be reached. The diluent can be water either hot or cold for diluting a concentrated fluid. The diluent can also be a gas, like nitrogen or carbon dioxide, for mixing with a beverage and forming a head of foam on the beverage or for producing a sparkling beverage. In this latter embodiment, the connections of the mixing chamber with the dosing means gas outlet and the valve delivering the beverage are made sufficiently tight so that the mixing chamber is sufficiently hermetic to atmospheric pressure and the mixing of the gas and the beverage is realised under the pressure provided by the dosing means..

The package and the device of the present invention present the advantage of enabling a safe dispensing of microbiologically sensitive fluids. First the integration of the dosing means such as described above in the any upstream of the visco-elastic valve creates a pressure important and stable during the of the fluid. This pressure can reach around 6 bars. Due to this high pressure the valve easily opens but also easily returns back at rest when the dosing means stops pumping. The valve closes immediately after the pump is stopped. No dripping occurs after the pump has stopped pumping.

The pressure to be delivered by the dosing means can be adapted in function of the fluid to be delivered and in particular the viscosity of the fluid. The higher the viscosity, the more important should be the pressure delivered by the dosing means. The pressure delivered by the dosing means can be adjusted by the choice of the nature of the flexible and resilient part of the dosing means housing and in particular its hardness.

Another advantage of the package and the device of the present invention is that a consistent dosing of the fluid can be reached.

Another advantage of the package and the device of the present invention is that the fluid can be delivered in the mixing chamber under pressure and this pressure can be used for getting an efficient dissolution in the diluent but also for eventually foaming the prepared beverage in the mixing chamber. Actually the shear forces of the fluids delivered by the dosing means are increased to encourage mixing.

## Claims

1. Package for storing and dosing a fluid comprising:
- a collapsible container for storing a fluid and presenting a fluid outlet,
- dosing means comprising :
. a housing, said housing presenting at least a pump inlet and at least a pump outlet and a part of the housing between the outlet and the inlet being flexible and resilient,
. a rotor presenting at last one chamber formed between the rotor surface and the housing,
- a visco-elastic valve,
wherein the housing pump inlet is connected to the collapsible container and the housing pump outlet is connected to the visco-elastic valve.

2. Package according to Claim 1 wherein the rotor of the dosing means is extended by a coupling means intended to be connected to a complementary coupling means belonging to drive means.

3. Package according to Claim 1 or 2 wherein the rotor of the dosing means presents several chambers.

4. Package according to any of the precedent claims wherein the collapsible container stores a microbiological sensitive fluid.

5. Package according to any of the precedent claims wherein the collapsible container stores a food or beverage ingredient concentrate.

6. Package according to any of the precedent claims **characterized in that** it is disposable

7. Package according to any of the precedent claims wherein the visco-elastic valve comprises a delivery block (41) having an input port (42) for receiving the fluid and an internal channel beginning at the input port and terminating in at least one output port (44), an elastomeric membrane (45) for enveloping the delivery block such that a portion of the elastomeric membrane covers the output port and the downstream end of the elastomeric membrane forms the valve outlet.

8. Package according to any of the precedent claims wherein the dosing means housing comprises a second pump inlet and a second pump outlet, the second housing pump inlet being connectable to a diluent supply and the Second housing pump outlet being connectable to a mixing chamber.

9. Beverage and food dispensing device on which a package according to any of claims 1 to 7 can be docked comprising :
- a diluent supply means,
- dosing drive means,
- a mixing chamber,
- a receiving area for receiving the package and which comprises means for coupling the package dosing means with the dosing drive means and means for coupling the one-way valve with the mixing chamber,
- control means for controlling the supply of diluent and driving the dosing drive means.

10. Beverage and food dispensing device according to Claim 9 wherein the diluent supply means comprises a water supply duct connected to a water pump and optionally to a water heating or cooling system.

11. Beverage and food dispensing device according to Claim 9 or 10 wherein the dosing means drive means comprise a motor and a driveshaft connected to the complementary coupling means to link with the coupling means of the liquid pump.

12. Beverage and food dispensing device according to any of claims 9 to 11 wherein it further comprises a controller associated with the control means and programmed to control and coordinate the activation of the dosing means drive means and the activation of the diluent supply means.

13. Beverage and food dispensing device on which a package according to claim 8 can be docked comprising :
- a diluent supply means,
- dosing drive means,
- a mixing chamber,
- a receiving area for receiving the package and which comprises :
. means for coupling the package dosing means with the dosing drive means,
. means for coupling the one-way valve with the mixing chamber,
. means for coupling the diluent supply means with the second pump inlet of the dosing means housing, and
. means for coupling the mixing chamber with the second pump outlet of the dosing means housing,
- control means for driving the dosing drive means.

14. Device for dosing and delivering a fluid, the devide being able to be connected to a collapsible container, said device comprising:
- dosing means comprising :
. a housing, said housing presenting at least a pump inlet and at least a pump outlet and a part of the housing between the inlet and the outlet being flexible and resilient,
. a rotor presenting at last one chamber formed between the rotor surface and the housing,
- a visco-elastic valve,
wherein the housing pump outlet is connected to the visco-elastic valve.
